# FASCICULE DE BREVET EUROPEEN

(11) **EP 1 469 113 B1**
(45) Date de publication et mention de la délivrance du brevet: **22.08.2007**
(21) Numéro de dépôt: 04356050.7
(22) Date de dépôt: 15.04.2004
(51) Int. Cl.: D04H 3/07, D04H 3/08, D04H 3/12

(54) **Procédé et installation de fabrication d'une préforme de renfort**
Verfahren und Vorrichtung zur Herstellung einer Vorform eines Verstärkungselementes
Process and apparatus for manufacturing a reinforcement preform

(30) Priorité: 17.04.2003 FR 0304805
(43) Date de publication de la demande: 20.10.2004
(73) Titulaire: Hexcel Reinforcements, 69100 Villeurbanne (FR)
(72) Inventeur: Bruyère, Alain, 38630 Les Avenières (FR)
(74) Mandataire: Sarlin, Laure V.

(56) Documents cités:
- EP-A- 0 032 858
- EP-A- 0 193 380
- WO-A-98/17852
- FR-A- 2 581 379

## Description

La présente invention concerne le domaine technique de la fabrication de préformes ou renforts fibreux, multidirectionnels, destinés à la fabrication de pièces en matériaux composites.

Dans le domaine technique ci-dessus il est connu, notamment d'une demande FR 2 581 379, de réaliser, à partir de fils de renfort, une préforme ou un renfort fibreux multidirectionnel, destiné à faire l'objet d'une injection de résine pour constituer une pièce en matériau composite.

La demande FR 2 581 379 a ainsi proposé de réaliser des préformes pour des pièces de révolution tronconiques ou ellipsoïdes, telles que des tuyères de réacteurs, en procédant au bobinage, sur un support présentant des picots, d'un fil de renfort pré-imprégné d'un agent de liaison, destiné à éviter tout glissement relatif du fil sur le support, afin de conserver une parfaite homogénéité de la répartition du fil de renfort au niveau du renfort fibreux.

Un tel procédé de fabrication permet la réalisation de renforts fibreux multidirectionnels, dits bobinables, présentant une forme générale à symétrie de révolution. Toutefois, ce procédé de fabrication présente l'inconvénient de ne pas permettre la fabrication de renforts fibreux multidirectionnels présentant des formes complexes ou gauches, sans axe de symétrie de révolution privilégié ou, encore, présentant des régions localement concaves, eu égard à la forme générale du renfort fibreux.

Par ailleurs, le procédé selon la demande FR 2581 379 présente l'inconvénient de placer le fil de renfort, au fur et à mesure de sa dépose, dans un état qui pourrait être qualifié de précontraint. Or, cette précontrainte influence le comportement mécanique du renfort fibreux multidirectionnel et peut affecter les performances de la pièce incorporant ce renfort fibreux.

De plus, le bobinage du fil de renfort impose, en raison de la tension appliquée à ce dernier, une trajectoire de dépose correspondant nécessairement à une géodésique de la surface du support et limite ainsi les types de structures de renfort réalisables.

De même, la demande WO 98/17852 décrit différents procédés et appareillages pour former des textiles plats ou en forme, faisant notamment appel à une technique de bobinage autour d'un mandrin.

Ainsi, il apparaît le besoin de disposer d'un nouveau procédé de fabrication qui permette de réaliser des préformes ou renforts fibreux multidirectionnels susceptibles de présenter des formes complexes ou gauches avec, notamment, des régions localement concaves et présentant dans ces régions, notamment, des fils de renfort disposés selon différentes directions.

Afin d'atteindre cet objectif, l'invention concerne un procédé de fabrication d'un renfort fibreux multidirectionnel, destiné à constituer une préforme poreuse pour la réalisation d'une pièce en matériau composite, procédé consistant à déposer au moins un fil de renfort en couches successives sur un support, en association avec un liant, de manière à assurer, d'une part, une adhérence de la première couche sur la surface du support et, d'autre part, une liaison des couches successives entre elles.

Selon l'invention, ce procédé de fabrication est caractérisé en ce qu'il consiste en outre, lors de la dépose du fil de renfort, à presser ce fil de renfort contre le support ou une couche précédente en exerçant une pression de direction sensiblement perpendiculaire à la surface du support au point de dépose du fil et ainsi assurer, grâce au liant, un maintien du fil sur son point de dépose, et ce au fur et à mesure de sa dépose, et à assurer un avancement du fil de renfort au fur et à mesure de la dépose du fil de renfort, de manière à n'induire aucune tension dans ledit fil de renfort et à le déposer à l'état de repos.

La liaison du fil de renfort, au niveau de son point de dépose, avec le support ou les fils de la couche sur laquelle il est déposé, se fait grâce au liant par application de la pression notamment. Dans certains cas mentionnés ci-après, une activation du liant est nécessaire, pour que ce dernier assume sa fonction de maintien du fil de renfort à son point de dépose. Dans d'autres cas, le liant est déposé au fur et à mesure, en amont du fil de renfort dans un état liquide ou pâteux dans lequel il est apte à assumer sa fonction de liaison et aucune activation supplémentaire n'est donc nécessaire. Le procédé selon l'invention permet donc, au fur et à mesure de la dépose du fil de renfort et de façon simultanée ou quasi-simultanée avec cette dernière, de positionner le fil sur une forme donnée, le liant assurant son maintien, par adhésion, dans cette position, pour éviter tout glissement ou déplacement ultérieur.

La mise en oeuvre d'un liant, associé à la pression exercée sur le fil lors de sa dépose, permet de positionner, de façon particulièrement précise, le ou les fils de renfort déposés, selon des courbes prédéfinies qui ne correspondent pas nécessairement à des lignes géodésiques de la surface du support. Ainsi, le procédé selon l'invention permet la formation de préformes sur un support plan ou, encore, la formation de préformes sur un support conique, avec dépose de fils de renfort circonférentiellement et selon des génératrices de la surface. Bien entendu, le procédé de fabrication selon l'invention peut être mis en oeuvre pour diverses autres formes de supports.

Le dépôt du fil à l'état de repos permet la réalisation d'un renfort fibreux multidirectionnel qui pourrait être considéré comme ayant un comportement isotrope ou, tout au moins, comme ne possédant pas une direction privilégiée de résistance induite par la tension du fil, dans la mesure où, selon cette caractéristique de l'invention, les fils de renfort déposés sont exempts de toute précontrainte.

Selon l'invention, il est possible d'utiliser tout type de liant, compatible avec la nature du renfort fibreux multidirectionnel et du traitement subit par ce dernier, notamment lors de la fabrication de la pièce en matériau composite.

Selon une caractéristique de l'invention, le liant utilisé est activé au fur et à mesure de la dépose du fil de renfort. Dans ce cas, le liant sera alors préalablement déposé, soit sur le support, soit sur le fil de renfort lui-même.

Selon une autre caractéristique de l'invention, le liant est, au contraire, déposé au fur et à mesure de la dépose du fil de renfort et en amont du point de dépose de ce dernier.

Selon l'invention, le fil de renfort peut être déposé de toute façon appropriée, manuellement ou, encore, au moyen d'un automate.

Selon une caractéristique préférée, le fil de renfort est déposé au moyen d'un automate ou robot équipé d'un doigt de dépose présentant une tête de pressage destinée à exercer une pression sur le fil de renfort et une gorge de guidage du fil jusqu'à la tête de pressage.

Selon une caractéristique préférée de mise en oeuvre, mais non strictement nécessaire, il est alors exercé, sur le doigt de dépose, une pression perpendiculaire à la surface de la tête de pressage. Par ailleurs, la surface de la tête de pressage est, de préférence, maintenue tangente à la surface du support pendant la dépose du fil de renfort.

Il est à noter que, selon l'invention, il peut être déposé un ou plusieurs fils de renfort simultanément, selon des trajectoires de dépose parallèles. Il pourra alors être possible de mettre en oeuvre autant de doigts de dépose qu'il y a de fils de renfort déposés simultanément.

Comme cela a été dit précédemment, il est possible d'utiliser tout type de liant approprié.

Selon une forme de mise en oeuvre de l'invention, il est utilisé, en tant que liant, une poudre thermoplastique ou une poudre thermodurcissable ou, encore, un mélange des deux. Parmi les poudres thermoplastiques utilisables, il est possible de citer à titre d'exemples non limitatifs les poudre de polyoléfines, de polyamides, de polyéthersulfone, tandis que, parmi les poudres thermodurcissables, il est possible de citer les poudres de résines époxydes avec ou sans agent durcisseur, les poudres phénoliques, les poudres de polyester. Le procédé prévoit alors d'assurer un chauffage de la zone de dépose du fil de renfort, et ainsi de réaliser un thermocompressage. Ce chauffage peut être réalisé, soit au niveau du doigt de dépose par une résistance chauffante, soit au moyen d'une source rayonnante de chaleur dirigée vers la zone de dépose du fil de renfort.

De même, la mise en oeuvre de la poudre ci-dessus peut être réalisée de différentes façons. Ainsi, soit la poudre est associée préalablement au fil de renfort qu'elle recouvre en partie au moins, soit, au contraire, cette poudre est projetée sur la surface de support ou sur les couches précédentes de fils de renfort, lors de la dépose du fil de renfort.

Selon l'invention, il peut également être mis en oeuvre une surface de support préalablement recouverte, en partie au moins, d'une poudre thermoplastique et/ou thermodurcissable.

Selon une autre caractéristique de l'invention, il est mis en oeuvre, en tant que liant, une résine, de même nature chimique que les poudres ci-dessus, utilisée sous forme fondue encore appelée « hot melt ». Cette résine hot melt est alors déposée sur le support, puis sur les couches précédentes de fils, au fur et à mesure de la dépose du fil de renfort et en amont de la dépose du fil de renfort.

Selon une autre caractéristique de l'invention, il est mis en oeuvre, en tant que liant, un fil thermoplastique guipé sur le fil de renfort qui est alors chauffé au niveau de son point de dépose. Le fil thermoplastique peut être de toute nature appropriée et, par exemple mais non exclusivement, comprendre un fil en polyamide, polyoléfine, polyéthersulfone, polyétherétheracétone (PEEK) ou polyétherimide (PEI).

Selon une autre caractéristique de l'invention, il est mis en oeuvre un liant, intimement lié au fil de renfort pour former un fil de renfort hybride. Ainsi, il est possible d'utiliser, en tant que liant des filaments de matière thermoplastique, de même nature que les fils thermoplastiques ci-dessus, qui seront mélangés à des filaments de matériau de renfort, mélange qui sera filé pour former un fil de renfort hybride.

Selon une autre caractéristique de l'invention, il est mis en oeuvre, en tant que liant, une solution ou une émulsion pulvérisable d'au moins une résine adhésive, telle que, par exemple mais non exclusivement, une résine polyacrylique, polyvinylique ou polyuréthane.

Selon l'invention, le fil de renfort peut être déposé de façon continue ou, au contraire, en segments discontinus.

Selon l'invention, en fonction de la nature du fil de renfort et du liant utilisés, il sera appliqué, sur le fil de renfort lors de sa dépose, une pression comprise entre 0,01 bar et 30 bar et, de préférence, comprise entre 0,1 bar et 1 bar.

De même, selon la nature du liant utilisé et du fil de renfort et, plus particulièrement, en cas d'utilisation d'un liant thermoplastique ou thermo-adhésif, le point de dépose du fil de renfort sera chauffé à une température comprise entre 50 °C et 450 °C et, de préférence, comprise entre 50 °C et 150 °C.

Bien entendu, le procédé de fabrication selon l'invention peut mettre en oeuvre différents types de fils de renfort, tels que, par exemple mais non exclusivement, des fils de carbone, de verre, de polyesters, d'aramides, de métal ou encore des mélanges de ces matériaux.

De plus, le terme « fil de renfort » doit être entendu au sens large et inclut, par exemple, les faisceaux ou torons de fils, ainsi que les tresses de fils.

L'invention concerne, également, une préforme comprenant plusieurs couches de fils de renfort, disposées selon au moins deux directions et solidarisées entre elles par un liant, caractérisées en ce qu'elles sont fabriquées conformément au procédé selon l'invention.

Selon une caractéristique de l'invention, les fils de renfort, constitutifs de la préforme poreuse, sont dans un état de repos en n'étant soumis à aucune précontrainte.

L'invention concerne, aussi, une installation pour la mise en oeuvre du procédé de fabrication ci-dessus, une telle installation comprenant :
■ un support dont la surface présente la forme du renfort fibreux à fabriquer,
■ des moyens de stockage d'au moins un fil de renfort,
■ au moins une tête de dépose qui comprend des moyens de guidage du fil de renfort jusqu'à des moyens de dépose présentant une surface de pressage du fil de renfort contre la surface du support,
■ des moyens de guidage du fil de renfort depuis les moyens de stockage jusqu'à la tête de dépose,
■ des moyens de déplacement de la tête de dépose,
■ des moyens de commande des moyens de déplacement adaptés pour assurer un déplacement de la tête de dépose par rapport à la surface du support, de manière à déplacer les moyens de dépose contre la surface du support selon une trajectoire prédéterminée, en pressant le fil de renfort contre la surface du support et en maintenant la surface de pressage tangente à la surface du support pour que la pression exercée possède une direction normale à la surface du support,
■ des moyens d'amenée ou d'avance du fil de renfort au fur et au mesure de sa dépose, de manière à n'induire aucune tension dans le fil de renfort.

Les moyens de dépose peuvent être réalisés de toute façon appropriée et, selon une forme préférée, mais non strictement nécessaire de réalisation, les moyens de dépose comprennent au moins un doigt de dépose présentant une tête de pressage destinée à exercer une pression sur le fil de renfort contre le support et une gorge de guidage du fil jusqu'à la tête de pressage.

Selon encore une autre caractéristique de l'invention, l'installation comprend, en outre, des moyens d'application d'un liant.

Selon la nature du liant mis en oeuvre, qu'il soit ou non appliqué au moyen de l'installation, cette dernière peut comprendre, en outre, des moyens d'activation du liant pouvant être réalisés de toute façon appropriée. Dans le cadre de la mise en oeuvre d'un liant thermoplastique ou thermocollant, les moyens d'activation comprennent des moyens de chauffage de la zone de dépose et de pression du fil de renfort. Ces moyens de chauffage peuvent alors être réalisés de différentes façons, telles que, par exemple, sous la forme d'une résistance chauffante incorporée dans le doigt de dépose ou, encore, sous la forme d'une source rayonnante, telle que, par exemple, une source de rayons infrarouges.

Dans le cas de la mise en oeuvre, en tant que liant, d'une résine polymérisable aux rayons ultraviolets, les moyens d'activation sont constitués par une source de rayons ultraviolets.

Diverses autres caractéristiques du procédé de fabrication de la préforme et de l'installation nécessaire à la mise en oeuvre de ce procédé ressortent de la description ci-dessous, effectuée en référence aux dessins annexés qui illustrent une forme, préférée mais non limitative, de réalisation d'une installation de fabrication conforme à l'invention, ainsi que des exemples non limitatifs de préformes fabriquées selon l'invention.
La **fig. 1** est une vue générale d'une installation d'un exemple de réalisation d'une installation pour la mise en oeuvre du procédé de fabrication conforme à l'invention.
La **fig. 2** est une vue de détail de moyens de dépose d'un fil de renfort équipant l'installation illustrée à la **fig. 1.**
La **fig. 3** est une vue, analogue à la **fig. 2,** montrant les moyens de dépose en appui sur une surface convexe.
Les **fig. 4** à **6** sont des vues de différentes phases de fabrication d'un renfort fibreux multidirectionnel ou préforme conformément au procédé selon l'invention.
La **fig. 7** illustre une variante de réalisation de moyens de dépose susceptibles d'équiper une installation pour la mise en oeuvre du procédé de fabrication selon l'invention.

L'invention vise à permettre la fabrication d'un renfort fibreux multidirectionnel, susceptible de présenter une forme tridimensionnelle gauche ou complexe et destiné à constituer une préforme poreuse pour la réalisation d'une pièce en matériau composite, par exemple par injection d'une résine dans la préforme poreuse, préalablement disposée dans un moule.

Les diverses techniques de fabrication de pièces en matériaux composites, à partir de préformes poreuses, sont largement connues de l'homme du métier et ne rentrent pas dans le cadre de la présente invention, de sorte qu'il n'apparaît pas nécessaire de les décrire plus avant.

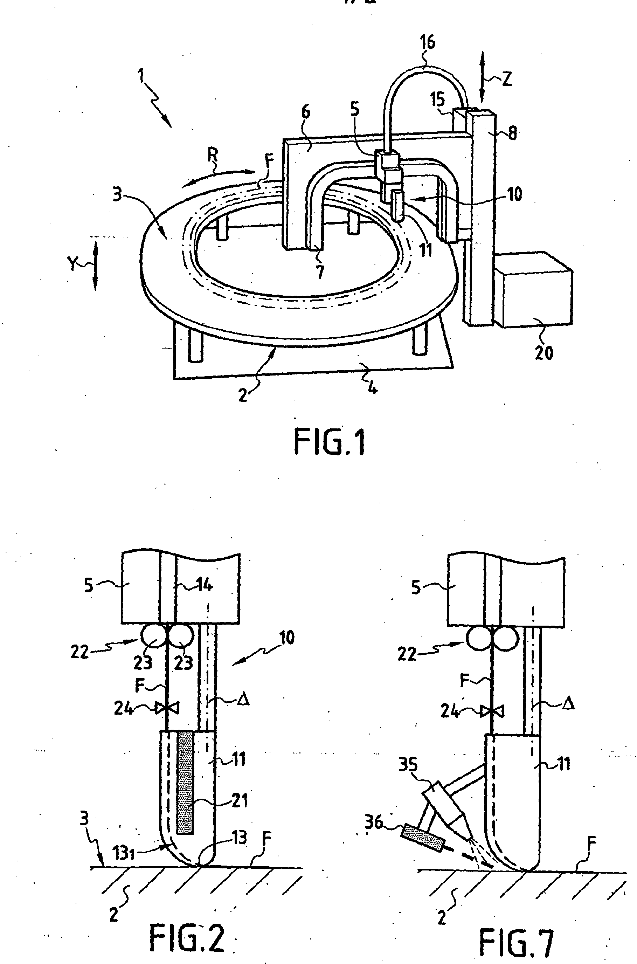

L'invention vise à offrir une très grande liberté de formes pour la réalisation du renfort fibreux multidirectionnel, afin de permettre une grande variété d'applications. A cet effet, l'invention propose d'utiliser une installation, telle qu'illustrée à la **fig. 1** et désignée dans son ensemble par la référence **1,** permettant une mise en oeuvre automatique ou semi-automatique du procédé conforme à l'invention.

Ainsi, l'installation **1** comprend un support **2** dont la surface de support **3** pourra être considérée comme une empreinte mâle ou femelle selon la face d'application du fil de renfort. Afin de faciliter l'opération de dépose des fils de renfort, le support **2** est porté par une table **4**, susceptible d'être déplacée en translation dans un plan horizontal, selon deux axes **X** et **Y** orthogonaux, ainsi qu'en rotation **R** toujours dans le plan horizontal autour d'un axe vertical.

Afin de permettre la dépose du fil de renfort sur la surface **3,** conformément à l'invention, l'installation **1** comprend, également, au moins une et, selon l'exemple illustré, exactement une tête de dépose **5.** Dans le cadre de l'exemple d'installation illustrée, la tête de dépose **5** est portée par un portique **6,** pourvu d'une voie de déplacement **7**, le long de laquelle la tête **5** peut être déplacée en translation.

Afin de conférer un degré de liberté de déplacement supplémentaire à la tête de dépose **5,** le portique **6** est, en outre, supporté par une colonne **8** le long de laquelle il est susceptible de se déplacer en translation verticale selon la direction **Z**.

Il est à noter que la table **4**, le portique **6** et la colonne **8**, sont équipés de moyens d'automatisation et de motorisation appropriés constituant des moyens de déplacement de la tête de dépose **5** par rapport à la surface **3** du support **2.**

Afin d'assurer, conformément à l'invention, sa fonction de dépose d'un fil de renfort, la tête de dépose **5** comprend alors des moyens de dépose **10,** plus particulièrement illustrés à la **fig. 2**.

Selon l'exemple illustré, les moyens de dépose **10** sont constitués par un doigt de dépose **11,** présentant, à son extrémité, une tête de pressage **13** dont la surface est destinée, comme cela apparaîtra par la suite, à presser le fil de renfort **F** contre la surface **3** du support **2.** Le doigt présente, en outre, une gorge **13₁** de guidage du fil jusqu'à la tête de pressage **13.** La tête de dépose présente, bien entendu, des moyens de guidage du fil de renfort **F** jusqu'au doigt **11** qui peuvent être réalisés de toute façon appropriée, telle que par des gorges ou des tubes **14** dans lesquels le fil de renfort **F** passe. Selon l'exemple illustré, le doigt de dépose **11** est mobile en rotation par rapport à la tête **5,** autour d'un axe Δ en étant déplacé en rotation autour de cet axe par des moyens moteur non représentés. De plus, le doigt **11** est mobile en translation par rapport à la tête **5** selon l'axe Δ, en étant actionné par des moyens, non représentés, permettant de moduler la pression d'appui de la tête de pressage **13** sur la surface **3.**

Il est à noter que l'installation **1** comprend, en outre, des moyens de stockage **15** du fil de renfort **F** qui peuvent être réalisés de toute façon appropriée, telle que, par exemple, sous la forme d'un dévidoir, non représenté. L'installation **1** comprend, également, des moyens **16** de guidage du fil de renfort depuis les moyens de stockage **15** jusqu'à la tête de dépose **5.** Les moyens de guidage **16** peuvent être réalisés de toute façon appropriée et, selon l'exemple illustré, sous la forme d'une gaine flexible, à l'intérieur de laquelle le fil de renfort **F** circule librement.

L'installation de fabrication **1** comprend, en outre, des moyens **20** de commande des moyens de déplacement de la tête **5,** des moyens de déplacement du doigt **11,** ainsi que des moyens de déplacement du support **3.**

Les moyens de commande **20** sont, par exemple, réalisés sous la forme d'une unité de commande ou d'un automate programmable adapté pour piloter l'installation **1,** de manière à assurer un déplacement du doigt **11** contre la surface **3** du support, de façon à y déposer le fil **F** conformément à l'invention.

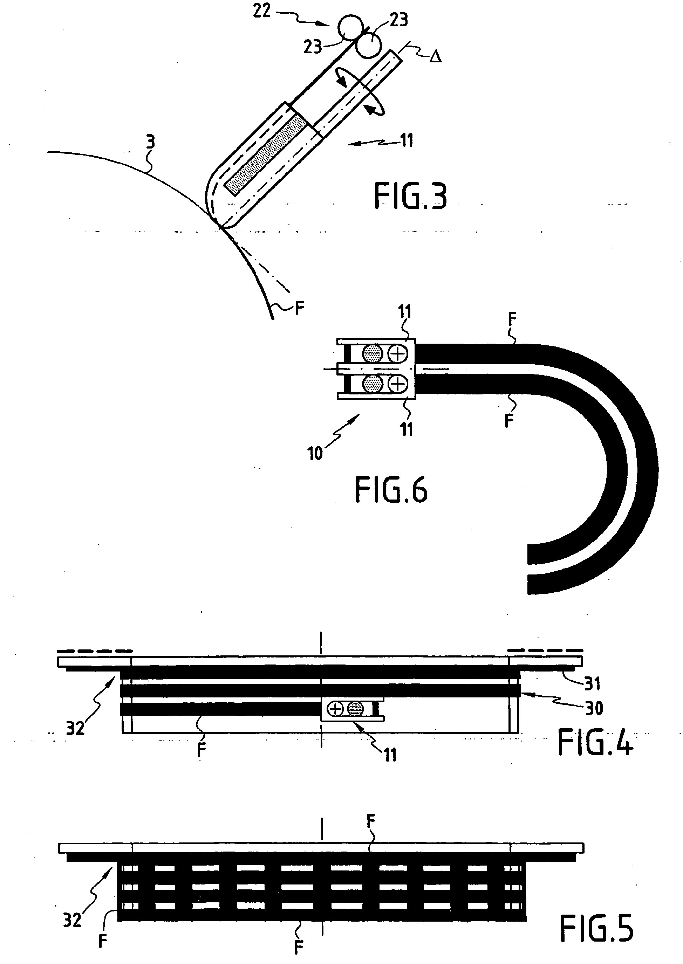

Ainsi, les moyens de commande **20** assurent un déplacement de la tête de dépose **5** par rapport à la surface du support **3,** de manière à déplacer les moyens de dépose **10** contre la surface de support **3,** selon une trajectoire prédéterminée, en pressant le fil de renfort **F** contre la surface du support **3** et en maintenant la surface de pressage **13** tangente à la surface de support **3,** comme le montre la **fig. 3**, pour que la pression, exercée sur le fil **F**, possède une direction normale à la surface **3** du support.

Selon l'exemple illustré, le fil de renfort **F** utilisé est un fil, en partie au moins, recouvert d'une poudre thermoplastique et le doigt de dépose **11** comprend alors une résistance chauffante **21** qui permet de fondre la poudre thermoplastique au fur et à mesure de la dépose du fil **F,** de manière à faire adhérer le fil **F,** tout d'abord sur la surface **3** du support **2** lors de la première passe, puis sur la couche de fils précédente lors des passes suivantes.

Conformément à une caractéristique préférée de l'invention, la tête de dépose comprend des moyens **22** d'amenée ou d'avance du fil de renfort. Les moyens d'amenée **22** comprennent, par exemple, un ensemble de galets d'entraînement **23** qui pincent le fil de renfort et qui sont entraînés en rotation par des moyens moteur, non représentés. La rotation des galets **23** est alors pilotée par l'unité de commande **20,** de manière à alimenter le doigt **11** d'une longueur de fil de renfort **F** correspondant sensiblement à la longueur de la trajectoire du doigt **11 sur** la surface **3**, de manière que le fil de renfort y soit déposé sans tension.

La mise en oeuvre d'une installation, telle que plus particulièrement illustrée à la **fig. 1**, permet, par exemple, la réalisation d'une préforme pour la constitution d'un châssis de hublots d'avions par exemple. Il est à noter que, dans ce cas, les fils de renfort **F,** illustrés en traits mixtes à la **fig. 1**, peuvent être déposés selon des spires de forme générale ovoïde dans un plan correspondant au plan du support lors de la première passe, puis selon des directions radiales ou centrifuges pour la deuxième passe, puis à nouveau en spires pour la troisième passe et ainsi de suite, jusqu'à obtenir l'épaisseur et la forme recherchée.

En effet, en modifiant les caractéristiques dimensionnelles des différentes passes, il est possible de l'affranchir, en partie au moins, de la forme de la surface de dépose.

Il est à noter que, afin de permettre la dépose du fil de renfort **F** en segments indépendants ou discontinus, les moyens de dépose comprennent, également, des moyens **24** de coupe du fil **F** pilotés par l'unité de commande **20.**

Les **fig. 4** et **5** illustrent un autre exemple de mise en oeuvre du procédé conforme à l'invention, selon lequel la préforme à réaliser doit présenter un corps cylindrique **30** avec un épaulement **31**. Selon cet exemple, l'installation et le procédé conformes à l'invention permettent de disposer le fil en couches successives selon deux orientations perpendiculaires, comme cela ressort comparativement des **fig**. **3** et **5.** A cet égard, il doit être remarqué que le procédé et l'installation selon l'invention permettent d'assurer une dépose d'un fil de renfort selon une trajectoire de dépose, contenue dans un plan radial, dans l'angle rentrant **32**.

La **fig. 6** illustre un exemple de trajectoire pour le dépôt simultané de deux fils de renfort en parallèle.

Par ailleurs, selon la nature du liant utilisé pour assurer la liaison, d'une part, de la première couche de fils sur la surface du support et, d'autre part, des couches de fils entre elles, la tête de dépose peut être équipée de différents accessoires.

Ainsi, la **fig. 7** illustre une autre forme de réalisation selon laquelle le doigt de dépose **11** est équipé, d'une part, de moyens **35** d'application d'un liant, tels que, par exemple, une buse de pulvérisation et, d'autre part, de moyens d'activation **36** qui sont, dans le cas présent, constitués par une source de rayons ultraviolets.

Selon une autre forme de réalisation de l'invention, les moyens d'application 35 sont constitués par une buse de dépose d'une résine hot melt en amont du fil de renfort, au fur et à mesure de la dépose de ce dernier.

Bien entendu, divers autres moyens de dépose d'un liant pourraient être envisagés, en fonction du liant adopté.

De même, l'installation conforme à l'invention pourrait être réalisée d'une toute autre façon et, par exemple, mettre en oeuvre un automate ou robot à bras articulés.

Diverses autres modifications peuvent être ainsi apportées à l'invention sans sortir de son cadre.

## Revendications

1. - Procédé de fabrication d'un renfort fibreux multidirectionnel, destiné à constituer une préforme poreuse pour la réalisation d'une pièce en matériau composite, procédé consistant à déposer au moins un fil de renfort **(F)** en couches successives sur un support **(2)**, en association avec un liant, de manière à assurer, d'une part, une adhérence de la première couche sur la surface **(3)** du support **(2)** et, d'autre part, une liaison des couches successives entre elles,
**caractérisé en ce qu'**il consiste, en outre, lors de la dépose du fil de renfort, à presser ce fil de renfort **(F)** contre le support **(2)** en exerçant une pression de direction sensiblement perpendiculaire à la surface **(3)** du support **(2)** au point de dépose du fil **(F)** et à assurer l'avancement du fil de renfort **(F)** au fur et à mesure de la dépose du fil de renfort, de manière à n'induire aucune tension dans ledit fil de renfort et à le déposer à l'état de repos.

2. - Procédé de fabrication selon la revendication 1, **caractérisé en ce qu'**il consiste à activer le liant au fur et à mesure de la dépose du fil de renfort **(F)**.

3. - Procédé selon la revendication 1, **caractérisé en ce qu'**il consiste à déposer le liant en amont du fil de renfort **(F)** lors de la dépose de ce dernier.

4. - Procédé de fabrication selon l'une des revendications 1 à 3, **caractérisé en ce qu'**il consiste à déposer le fil de renfort **(F)** au moyen d'un doigt de dépose **(11)** présentant une tête de pressage **(13)** destinée à exercer une pression sur le fil de renfort et une gorge de guidage du fil **(F)** jusqu'à la tête de pressage **(13)**.

5. - Procédé de fabrication selon la revendication 4, **caractérisé en ce qu'**il consiste à exercer, sur le doigt de dépose **(11)**, une pression perpendiculaire à la surface de la tête de pressage **(13)** et à maintenir la surface de la tête de pressage **(13)** tangente à la surface **(3)** du support **(2)** pendant la dépose du fil de renfort **(F)**.

6. - Procédé de fabrication selon la revendication 5, **caractérisé en ce qu'**il consiste à déposer, simultanément, plusieurs fils de renfort **(F)** selon des trajectoires de dépose parallèles.

7. - Procédé de fabrication selon l'une des revendications 1 à 6, **caractérisé en ce qu'**il consiste à mettre en oeuvre, en tant que liant, une poudre thermoplastique et à chauffer la zone de dépose du fil de renfort.

8. - Procédé de fabrication selon la revendication 7, **caractérisé en ce qu'**il consiste à mettre en oeuvre un fil de renfort **(F)** recouvert, en partie au moins, d'une poudre thermoplastique.

9. - Procédé de fabrication selon la revendication 7 ou 8, **caractérisé en ce qu'**il consiste à projeter de la poudre thermoplastique sur la surface lors de la dépose du fil de renfort.

10. - Procédé de fabrication selon l'une des revendications 7 à 9, **caractérisé en ce qu'**il consiste à mettre en oeuvre une surface **(3)** de support **(2)** recouverte, en partie au moins, d'une poudre thermoplastique.

11. - Procédé de fabrication selon l'une des revendications 1 à 6, **caractérisé en ce qu'**il consiste à mettre en oeuvre, en tant que liant, une résine hot melt déposée sur le support au fur et à mesure de la dépose du fil de renfort et en amont de la dépose du fil de renfort.

12. **-** Procédé de fabrication selon l'une des revendications 1 à 6, **caractérisé en ce qu'**il consiste à mettre en oeuvre, en tant que liant, un fil thermoplastique guipé sur le fil de renfort et à chauffer le fil de renfort au niveau de son point de dépose.

13. **-** Procédé de fabrication selon l'une des revendications 1 à 6, **caractérisé en ce qu'**il consiste à mettre en oeuvre, en tant que liant, une solution ou une émulsion pulvérisable d'au moins une résine adhésive.

14. **-** Procédé de fabrication selon l'une des revendications 1 à 6, **caractérisé en ce qu'**il consiste à mettre en oeuvre un liant intimement lié au fil de renfort pour former un fil de renfort hybride.

15. - Procédé de fabrication selon l'une des revendications 1 à 14, **caractérisé en ce qu'**il consiste à déposer le fil de renfort en segments discontinus.

16. - Procédé selon l'une des revendications 1 à 14, **caractérisé en ce qu'**il consiste :
■ à mettre en oeuvre un support **(2)** présentant une forme concave localement,
■ à déposer les fils de renfort dans la région concave au moins du support **(2).**

17. - Procédé de fabrication selon l'une des revendications 1 à 16, **caractérisé en ce qu'**il consiste à exercer, sur le fil de renfort **(F)**, une pression comprise entre 0,01 bar et 30 bar et, de préférence, comprise entre 0,1 bar et 1 bar.

18. **-** Procédé de fabrication selon l'une des revendications 1 à 17, **caractérisé en ce qu'**il consiste à chauffer le point de dépose du fil de renfort à une température comprise entre 50 °C et 450 °C et, de préférence, comprise entre 50 °C et 150 °C.

19. - Préforme poreuse comprenant plusieurs couches de fils de renfort **(F)** disposées selon au moins deux directions et solidarisées entre elles par un liant, **caractérisée en ce que** les fils de renfort **(F)** sont à l'état de repos et ne sont soumis à aucune précontrainte et **en ce que** la préforme est fabriquée conformément au procédé de fabrication selon l'une des revendications 1 à 18.

20. - Installation pour la mise en oeuvre du procédé de fabrication selon l'une des revendications 1 à 18, **caractérisée en ce qu'**elle comprend :
■ un support **(2)** dont la surface **(3)** présente la forme du renfort fibreux à fabriquer,
■ des moyens de stockage **(15)** d'au moins un fil de renfort **(F)**,
■ au moins une tête de dépose **(5)** qui comprend des moyens de guidage du fil de renfort jusqu'à des moyens de dépose **(10)** présentant une surface de pressage **(13)** du fil de renfort contre la surface **(3)** du support **(2)**,
■ des moyens de guidage **(16)** du fil de renfort **(F)** depuis les moyens de stockage **(15)** jusqu'à la tête de dépose **(5)**,
■ des moyens de déplacement de la tête de dépose **(5),**
■ des moyens de commande **(20)** des moyens de déplacement adaptés pour assurer un déplacement de la tête de dépose **(5)** par rapport à la surface **(3)** du support **(2)**, de manière à déplacer les moyens de dépose **(10)** contre la surface **(3)** du support **(2)** selon une trajectoire prédéterminée, en pressant le fil de renfort **(F)** contre la surface **(3)** du support **(2)** et en maintenant la surface de pressage **(13)** tangente à la surface **(3)** du support **(2)** pour que la pression exercée possède une direction normale à la surface **(3)** du support **(2)** et des moyens **(22)** d'amenée du fil de renfort **(F)** au fur et à mesure de sa dépose, de manière à n'induire aucune tension dans le fil de renfort **(F)**.

21. - Installation selon la revendication 20, **caractérisée en ce qu'**elle comprend, en tant que moyens de dépose, un doigt de dépose **(11)** présentant une tête de pressage **(13)** destinée à exercer une pression sur le fil de renfort contre le support et une gorge de guidage du fil jusqu'à la tête de pressage **(13)**.

22. - Installation selon la revendication 20 ou 21, **caractérisée en ce qu'**elle comprend des moyens **(35)** d'application d'un liant.

23. - Installation selon l'une des revendications 20 à 22, **caractérisée en ce qu'**elle comprend des moyens **(36)** d'activation d'un liant.

24. - Installation selon la revendication 23, **caractérisée en ce que** les moyens d'activation **(36)** comprennent des moyens de chauffage **(21)** de la zone de dépose et de pression du fil de renfort **(F)**.

## Claims

1. - Fabrication process for a multidirectional fibrous reinforcement designed to be a porous preform for producing a part made of a composite material, a process consisting in depositing at least one reinforcing thread **(F)** in successive layers on a support **(2),** in association with a binder, so as to ensure first, adherence of the first layer to the surface **(3)** of the support **(2)** and second, a bond between the successive layers,
**characterised in that** during the deposit of the reinforcing thread it also consists in pressing the reinforcing thread **(F)** against the support **(2)** by exerting a pressure substantially perpendicular to the surface **(3)** of the support **(2)** at the point where the thread is deposited **(F)** and in ensuring that the reinforcing thread **(F)** will advance as the reinforcing thread is deposited, so as not to cause any tension in said reinforcing thread and so as to deposit the thread without tension.

2. - Fabrication process according to claim 1, **characterised in that** it consists in activating the binder as the reinforcing thread **(F)** is deposited.

3. - Fabrication process according to claim 1, **characterised in that** it consists in depositing the binder ahead of the reinforcing thread **(F)** while the reinforcing thread is being deposited.

4. - Fabrication process according to one of claims 1 to 3, **characterised in that** it consists in depositing the reinforcing thread **(F)** by means of a deposit finger **(11)** having a presser head **(13)** designed to exert pressure on the reinforcing thread, and a thread **(F)** guide groove leading to the presser head **(13).**

5. - Fabrication process according to claim 4, **characterised in that** it consists in exerting pressure perpendicular to the surface of the presser head **(13)** on the deposit finger **(11)** and keeping the surface of the presser head **(13)** tangent to the surface **(3)** of the support **(2)** while the reinforcing thread is being deposited **(F).**

6. - Fabrication process according to claim 5, **characterised in that** it consists in simultaneously depositing several reinforcing threads **(F)** in parallel deposit trajectories.

7. **-** Fabrication process according to one of claims 1 to 6, **characterised in that** it consists in using a thermoplastic powder as a binder and in heating the area where the reinforcing thread is to be deposited.

8. - Fabrication process according to claim 7, **characterised in that** it consists in using a reinforcing thread **(F)** covered at least partially with a thermoplastic powder.

9. - Fabrication process according to claim 7 or 8, **characterised in that** it consists in projecting the thermoplastic powder onto the surface while the reinforcing thread is being deposited.

10. - Fabrication process according to one of claims 7 to 9, **characterised in that** it consists in using a support **(2)** surface **(3)** covered at least partially with a thermoplastic powder.

11. **-** Fabrication process according to one of claims 1 to 6, **characterised in that** it consists in using as a binder a hot-melt resin deposited on the support as the reinforcing thread is being deposited and ahead of the deposit of the reinforcing thread.

12. **-** Fabrication process according to one of claims 1 to 6, **characterised in that** it consists in using as a binder a thermoplastic thread wrapped around the reinforcing thread and in heating the reinforcing thread at the point where it is deposited.

13. - Fabrication process according to one of claims 1 to 6, **characterised in that** it consists in using as a binder a pulverizable solution or emulsion of at least one adhesive resin.

14. **-** Fabrication process according to one of claims 1 to 6, **characterised in that** it consists in using a binder closely bound to the reinforcing thread so as to form a hybrid reinforcing thread.

15. - Fabrication process according to one of claims 1 to 14, **characterised in that** it consists in depositing the reinforcing thread in discontinuous segments.

16. - Process according to one of claims 1 to 14, **characterised in that** it consists in:
■ using a support **(2)** having a locally concave shape,
■ depositing the reinforcing thread at least in the concave area of the support **(2).**

17. - Fabrication process according to one of claims 1 to 16, **characterised in that** it consists in exerting a pressure of 0.01-30 bar, preferably 0.1-1 bar, on the reinforcing thread **(F).**

18. **-** Fabrication process according to one of claims 1 to 17, **characterised in that** it consists in heating the point where the reinforcing thread is deposited to a temperature of 50-450°C and preferably 50-150°C.

19. - Porous preform comprising several layers of reinforcing threads **(F)** arranged in at least two directions and bound to one another by a binder, **characterised in that** the reinforcing threads **(F)** are without tension and not subject to any preconstraint and **in that** the perform is fabricated in accordance with the fabrication process according to one of claims 1 to 18.

20. **-** System for implementing the fabrication process according to one of claims 1 to 18, **characterised in that** it comprises:
■ a support **(2),** the surface **(3)** of which has the form of the fibrous reinforcement to be fabricated,
■ means for storing **(15)** at least one reinforcing thread **(F),**
■ at least one deposit head **(5),** which includes means of guiding the reinforcing thread to the means of deposit **(10),** with a surface for pressing **(13)** the reinforcing thread against the surface **(3)** of the support **(2),**
■ means for guiding **(16)** the reinforcing thread **(F)** from the means of storage **(15)** to the deposit head **(5),**
■ means for moving the deposit head **(5),**
■ means for commanding **(20)** the means of moving, adapted to ensure moving the deposit head **(5)** in relation to the surface **(3)** of the support **(2)** so as to move the means of deposit **(10)** against the surface **(3)** of the support **(2)** in a predetermined trajectory, pressing the reinforcing thread **(F)** against the surface **(3)** of the support **(2)** and keeping the presser surface **(13)** tangent to the surface **(3)** of the support **(2)** so that the pressure exerted is in a normal direction in relation to the surface **(3)** of the support **(2),** and
- means **(22)** for bringing along the reinforcing thread **(F)** as it is being deposited, so as not to cause any tension in the reinforcing thread **(F).**

21. - System according to claim 20, **characterised in that** it comprises as a means of deposit a deposit finger **(11),** having a presser head **(13)** designed to exert pressure on the reinforcing thread against the support and a thread guide groove leading to the presser head **(13).**

22. - System according to claim 20 or claim 21, **characterised in that** it comprises means **(35)** for applying a binder.

23. - System according to one of claims 20 to 22, **characterised in that** it comprises means **(36)** for activating a binder.

24. - System according to claim 23, **characterised in that** the means for activation **(36)** comprise means for heating **(21)** the area of deposit and the area of pressure of the reinforcing thread **(F).**

## Patentansprüche

1. Verfahren zur Herstellung einer multidirektionalen Faserverstärkung, welche dazu bestimmt ist, eine poröse Vorform für die Herstellung eines Teils aus Verbundmaterial zu bilden, wobei das Verfahren darin besteht, wenigstens einen Verstärkungsfaden (F) in aufeinanderfolgenden Schichten, in Verbindung mit einem Bindemittel auf einen Träger (2) aufzubringen, so daß einerseits ein Haften der ersten Schicht auf der Oberfläche (3) des Trägers (2) und andererseits eine Verbindung der aufeinanderfolgenden Schichten untereinander gewährleistet wird,
**dadurch gekennzeichnet, daß** es ferner darin besteht, während des Aufbringens des Verstärkungsfadens diesen Verstärkungsfaden (F) unter Ausüben eines Druckes an der Aufbringstelle des Fadens (F) mit zur Oberfläche (3) des Trägers (2) im wesentlichen senkrechter Richtung gegen den Träger (2) zu drücken und das Vorwärtsbewegen des Verstärkungsfadens (F) entsprechend dem Aufbringen des Verstärkungsfadens sicherzustellen, so daß keinerlei Spannung in den Verstärkungsfaden eingebracht und dieser im Ruhezustand aufgebracht wird.

2. Herstellungsverfahren nach Anspruch 1, **dadurch gekennzeichnet, daß** es darin besteht, das Bindemittel entsprechend dem Aufbringen des Verstärkungsfadens (F) zu aktivieren.

3. Verfahren nach Anspruch 1, **dadurch gekennzeichnet, daß** es darin besteht, das Bindemittel beim Aufbringen des Verstärkungsfadens (F) vor diesem aufzubringen.

4. Herstellungsverfahren nach einem der Ansprüche 1 bis 3, **dadurch gekennzeichnet, daß** es darin besteht, den Verstärkungsfaden (F) mittels eines Aufbringfingers (11) aufzubringen, der einen Druckkopf (13), welcher dazu bestimmt ist, einen Druck auf den Verstärkungsfaden auszuüben, sowie eine Nut zur Führung des Fadens (F) bis zu dem Druckkopf (13) aufweist.

5. Herstellungsverfahren nach Anspruch 4, **dadurch gekennzeichnet, daß** es darin besteht, auf den Aufbringfinger (11) einen Druck senkrecht zur Oberfläche des Druckkopfes (13) auszuüben und die Oberfläche des Druckkopfes (13) während des Aufbringens des Verstärkungsfadens (F) die Oberfläche (3) des Trägers (2) berührend zu halten.

6. Herstellungsverfahren nach Anspruch 5, **dadurch gekennzeichnet, daß** es darin besteht, gleichzeitig mehrere Verstärkungsfäden (F) entlang paralleler Aufbringbahnen aufzubringen.

7. Herstellungsverfahren nach einem der Ansprüche 1 bis 6, **dadurch gekennzeichnet, daß** es darin besteht, als Bindemittel ein thermoplastisches Pulver zu verwenden und den Aufbringbereich des Verstärkungsfadens zu erhitzen.

8. Herstellungsverfahren nach Anspruch 7, **dadurch gekennzeichnet, daß** es darin besteht, einen wenigstens teilweise mit einem thermoplastischen Pulver überzogenen Verstärkungsfaden (F) zu verwenden.

9. Herstellungsverfahren nach Anspruch 7 oder 8, **dadurch gekennzeichnet, daß** es darin besteht, währen des Aufbringens des Verstärkungsfadens thermoplastisches Pulver auf die Oberfläche aufzuspritzen.

10. Herstellungsverfahren nach einem der Ansprüche 7 bis 9, **dadurch gekennzeichnet, daß** es darin besteht, eine Oberfläche (3) des Trägers (2) zu verwenden, die wenigstens teilweise mit einem thermoplastischen Pulver überzogen ist.

11. Herstellungsverfahren nach einem der Ansprüche 1 bis 6, **dadurch gekennzeichnet, daß** es darin besteht, als Bindemittel ein Hot Melt-Wachs zu verwenden, das auf dem Träger in dem Maße des Aufbringens des Verstärkungsfadens sowie vor dem Aufbringen des Verstärkungsfadens abgeschieden wird.

12. Herstellungsverfahren nach einem der Ansprüche 1 bis 6, **dadurch gekennzeichnet, daß** es darin besteht, als Bindemittel einen über den Verstärkungsfaden gesponnenen thermoplastischen Faden zu verwenden und den Verstärkungsfaden im Bereich seiner Aufbringstelle zu erhitzen.

13. Herstellungsverfahren nach einem der Ansprüche 1 bis 6, **dadurch gekennzeichnet, daß** es darin besteht, als Bindemittel eine Lösung oder eine sprühbare Emulsion aus wenigstens einem Haftwachs zu verwenden.

14. Herstellungsverfahren nach einem der Ansprüche 1 bis 6, **dadurch gekennzeichnet, daß** es darin besteht, ein mit dem Verstärkungsfaden innig verbundenes Bindemittel zu verwenden, um einen Hybridverstärkungsfaden zu bilden.

15. Herstellungsverfahren nach einem der Ansprüche 1 bis 14, **dadurch gekennzeichnet, daß** es darin besteht, den Verstärkungsfaden in unzusammenhängenden Segmenten aufzubringen.

16. Verfahren nach einem der Ansprüche 1 bis 14, **dadurch gekennzeichnet, daß** es darin besteht:
- einen Träger (2) zu verwenden, der eine lokal konkave Form aufweist,
- die Verstärkungsfäden wenigstens in dem konkaven Bereich des Trägers (2) aufzubringen.

17. Herstellungsverfahren nach einem der Ansprüche 1 bis 16, **dadurch gekennzeichnet, daß** es darin besteht, auf den Verstärkungsfaden (F) einen Druck zwischen 0,01 bar und 30 bar und vorzugsweise zwischen 0,1 bar und 1 bar auszuüben.

18. Herstellungsverfahren nach einem der Ansprüche 1 bis 17, **dadurch gekennzeichnet, daß** es darin besteht, die Aufbringstelle des Verstärkungsfadens auf eine Temperatur zwischen 50 °C und 450 °C und vorzugsweise zwischen 50 °C und 150 °C zu erhitzen.

19. Poröse Vorform mit mehreren Schichten aus Verstärkungsfäden (F), die entlang wenigstens zwei Richtungen angeordnet und durch ein Bindemittel untereinander fest verbunden sind, **dadurch gekennzeichnet, daß** die Verstärkungsfäden (F) im Ruhezustand sind und keinerlei Vorspannung ausgesetzt sind und daß die Vorform entsprechend dem Herstellungsverfahren nach einem der Ansprüche 1 bis 18 gefertigt wird.

20. Anlage für die Durchführung des Herstellungsverfahrens nach einem der Ansprüche 1 bis 18, **dadurch gekennzeichnet, daß** sie folgendes umfaßt:
- einen Träger (2), dessen Oberfläche (3) die Form der herzustellenden Faserverstärkung aufweist,
- Mittel (15) zur Lagerung wenigstens eines Verstärkungsfadens (F),
- wenigstens einen Aufbringkopf (5), der Mittel zum Führen des Verstärkungsfadens bis zu Aufbringmitteln (10) umfaßt, die eine Fläche (13) zum Aufpressen des Verstärkungsfadens auf die Oberfläche (3) des Trägers (2) aufweisen,
- Mittel (16) zum Führen des Verstärkungsfadens (F) von den Lagerungsmitteln (15) bis zum Aufbringkopf (5),
- Mittel zum Bewegen des Aufbringkopfes (5),
- Mittel (20) zum Steuern der Bewegungsmittel, die entsprechend ausgebildet sind, um ein Bewegen des Aufbringkopfes (5) gegenüber der Oberfläche (3) des Trägers (2) sicherzustellen, so daß die Aufbringmittel (10) gegen die Oberfläche (3) des Trägers (2) entlang einer vorbestimmten Bahn bewegt werden, wobei der Verstärkungsfaden (F) gegen die Oberfläche (3) des Trägers (2) gedrückt wird und wobei die Druckfläche (13) die Oberfläche (3) des Trägers (2) berührend gehalten wird, damit der ausgeübte Druck eine zur Oberfläche (3) des Trägers (2) normale Richtung aufweist,
- sowie Mittel (22) zum Zuführen des Verstärkungsfadens (F) entsprechend seines Aufbringens, so daß keinerlei Spannung in den Verstärkungsfaden (F) eingebracht wird.

21. Anlage nach Anspruch 20, **dadurch gekennzeichnet, daß** sie als Aufbringmittel einen Aufbringfinger (11) umfaßt, der einen Druckkopf (13), welcher dazu bestimmt ist, einen Druck auf den Verstärkungsfaden gegen den Träger auszuüben, sowie eine Nut zum Führen des Fadens bis zu dem Druckkopf (13) aufweist.

22. Anlage nach Anspruch 20 oder 21, **dadurch gekennzeichnet, daß** sie Mittel (35) zum Auftragen eines Bindemittels umfaßt.

23. Anlage nach einem der Ansprüche 20 bis 22, **dadurch gekennzeichnet, daß** sie Mittel (36) zum Aktivieren eines Bindemittels umfaßt.

24. Anlage nach Anspruch 23, **dadurch gekennzeichnet, daß** die Aktivierungsmittel (36) Mittel (21) zum Erhitzen des Aufbring- und Druckbereichs des Verstärkungsfadens (F) umfassen.
